# EUROPEAN PATENT APPLICATION

(11) **EP 4 675 307 A1**
(43) Date of publication of application: **07.01.2026**
(21) Application number: 24186797.7
(22) Date of filing: 05.07.2024
(51) Int. Cl.: G01S 7/40, G01S 7/41, G01S 7/48, G01S 7/497, G01S 13/86, G01S 13/931, G01S 17/86, G01S 17/931, G03B 29/00, G03B 43/00

(54) **A METHOD FOR FREE SPACE EXTENSION FOR AUTONOMOUS DRIVING**

(71) Applicant: Zenseact AB, 417 56 Gothenburg (SE)
(72) Inventor: SILVLIN, Jonatan, 417 42 Göteborg (SE); HEDBERG, Ognjan, 444 40 Stenungsund (SE)
(74) Representative: Zacco Sweden AB

(57) **Abstract**

A method for determining a free space (218, 220, 222, 224, 300, 302, 400) adjacent to a vehicle is disclosed. The vehicle comprises one or more sensors (324) arranged to detect objects adjacent to the vehicle and an apparatus (10) for processing sensor data. The method comprises obtaining (S102) target object data defining one or more target object types to detect, obtaining (S104) the sensor data from the one or more sensors, detecting (S106) one or more instances of the target object types in the sensor data, determining (S108) spatial location data for the one or more instances of the object types, wherein the spatial location data comprises instance location data sets defining positions of the instances, respectively, and determining (S110) the free space implicitly as a space between the vehicle and the instance location data sets by determining (5112) one or more unobstructed line of sights between the sensors of the vehicle and the instance location data sets, and generating (S114) the free space by combining the one or more unobstructed line of sights.

## Description

### TECHNICAL FIELD

The disclosed technology relates to methods and systems for determining a free space adjacent to a vehicle. In particular, but not exclusively the disclosed technology relates to guaranteeing a free space such that the vehicle can be moved forward safely.

### BACKGROUND

Automated Driving Systems (ADS) are rapidly improving in passenger vehicles. These systems increase safety and comfort by supporting the driver in dynamic driving tasks. These systems can be divided in two sub-categories; Autonomous Driving (AD) systems, configured to control the vehicle without human supervision, and Advanced Driver Assistance Systems (ADAS), arranged to assist a driver but not necessarily offer full autonomy. A variety of ADAS/AD systems are today available. ADS functions, that may be provided in both ADAS and AD systems, can be categorized as following:
- Safety functions, such as lane departure prevention, automatic emergency braking, emergency evasive steering, collision warning, and blind-spot detection, and
- Comfort functions, such as lane center following (cruise steering assistance), adaptive cruise control, speed control based on speed limit and curvature, and lane changing assistance.

In these systems, one or more sensors and computing devices are provided for determining so-called free space. Most often in the field of AD, this refers to a space in front of the vehicle. Making sure that there are no hurdles, pedestrians or any other objects in this space is critical to assure that the vehicle can be operated safely. The general approach used today for identifying the free space is to continuously keep track of a road surface section in front of the vehicle. This can be achieved by scanning the road surface section by using on-board vehicle sensors to measure the uninterrupted continuation of road detections in front of the vehicle, from which it could be derived that there are no objects present. The road surface section may divided in sub-sections such that the free space may be of different sizes at different points of time. In case the free space is found to be small, that is, it can only be determined that there is no objects in a most close-lying area, , the vehicle may as a consequence be stopped or the speed may be set relatively low. On the other hand, in case the free space is found to be large, that is, it has been found that there is no objects at a relatively large distance from the vehicle, the effect may be that the vehicle can be set to operate at a relatively high speed without compromising on safety.

Even though free space assessment in modern ADS are safe and reliable, there is a room for further improvement. For instance, by being able to determine the free space more accurately and/or more reliably, it is made possible for the ADS to e.g. avoid unnecessary stops or slow-downs related to incorrect assessment of the free space. Further, by being able to improve the free space assessment, it may also be possible to extend the free space and thereby not only covering an immediate area in front of the vehicle, but also a more distant area, e.g. an area placed 50 meters and beyond in front of the vehicle. Being able to extend the free space comes with the positive effect that both safety and comfort requirements can be even further improved.

### SUMMARY

The herein disclosed technology seeks to mitigate, alleviate or eliminate one or more of the above-identified deficiencies and disadvantages in the prior art to address various problems relating to how a road surface in front of or adjacent to a vehicle is being assessed to assure that there is a space free from objects, thereby providing for that the vehicle can be safely moved into this space. Systems of today are focussing on determining non-presence of objects. However, when available sensor data cannot provide sufficient information for guaranteeing the non-presence, the vehicle has to be stopped or at least being moved forward with reduced speed. The systems of today can be used as a system for assisting a driver in a so-called supervised driving system in which the driver is responsible for monitoring the operation and also take action in case the system fails in determining the free space. The systems of today can also be used as a complement for object recognition systems. By using a free space detection system in this way, it is made possible to operate the vehicle safely in an area in which an objection recognition system is not able to reliably detect objects on the road.

Various aspects and embodiments of the disclosed invention are defined below and in the accompanying independent and dependent claims.

A first aspect of the disclosed technology comprises a method for determining a free space adjacent to a vehicle. The vehicle comprises one or more sensors arranged to detect objects adjacent to the vehicle and an apparatus for processing sensor data. The method may comprise obtaining target object data defining one or more target object types to detect, obtaining the sensor data from the one or more sensors, detecting one or more instances of the target object types in the sensor data, determining spatial location data for the one or more instances of the object types, wherein the spatial location data comprises instance location data sets defining positions of the instances, respectively, and determining the free space implicitly as a space between the vehicle and the instance location data sets by determining one or more unobstructed line of sights between the sensors of the vehicle and the instance location data sets, and generating the free space by combining the one or more unobstructed line of sights.

The free space adjacent to the vehicle may be defined as an area, that is, a two-dimensional space, or a three-dimensional space placed next to the vehicle or including the vehicle. For instance, the free space adjacent to the vehicle may be a beam-shaped three-dimensional space extending from the vehicle and up to a maximum threshold in a direction of movement of the vehicle. The maximum threshold may be dependent on the on-board sensors being used, but also external conditions, such as weather conditions. By way of example, the maximum threshold may be 300 meters.

A second aspect of the disclosed technology comprises an apparatus for determining a free space adjacent to a vehicle, the apparatus comprising control circuitry configured to obtain target object data defining one or more target object types to detect, obtain sensor data from one or more sensors of the vehicle, detect one or more instances of the object types, determine spatial location data for the one or more instances of the object types, wherein the spatial location data comprises instance location data sets defining positions of the instances, respectively, and determine the free space implicitly as a space between the vehicle and the instance location data sets by determining one or more unobstructed line of sights between the sensors of the vehicle and the instance location data sets, and generating the free space by combining the one or more unobstructed line of sights.

With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that the free space can be determined implicitly. In other words, instead of determining non-presence of objects, certain target object types are being detected and once these are detected and the location data of these are determined, it is made possible to implicitly, or indirectly, determine that there is a free space between the vehicle and the detected objects since there is no object blocking the line of sight for the sensors. This provides for that reliable free space detection can be made even though weather conditions may be challenging. By way of example, in case the explicit free space detection cannot be made in reliable manner due to rain, the implicit free space detection can be used instead. By way of example, during rain, the implicit free space detection can identify other vehicles and as a consequence of having these identified, implicitly determine the space between an ego vehicle and the other vehicles as the free space. In addition to facilitate the free space detection in severe weather conditions, the implicit free space detection can also come with the positive effect that the free space can be extended. Under some circumstances, by way of example, it may namely be possible to more reliably identify other vehicles than to detect non-presence on the road surface. For instance, such situation may occur in a situation in which the ego vehicle is placed at the foot of a hill. Other vehicles placed in front of the ego vehicle and beyond the hill may be used for implicitly determining the free space even though only part of the road surface between the ego vehicle and the other vehicles is at least partly visible to the on-board sensors of the ego vehicle. Put differently, by using the implicit free space detection it is made possible to extend the free space beyond the road surface visible to the ego vehicle's on-board sensors.

The free space may be determined solely by using the implicit free space determination approach described above, but it is also possible to determine the free space by using the implicit free space determination approach in combination with the explicit free space determination approach, that is, detecting the objects and thereby indirectly the free space as described above, and also detecting the non-presence of objects on the road surface.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 illustrates by way of example a field of view of a sensor mounted in a front of a vehicle.
Fig. 2 illustrates a vehicle from above, wherein the vehicle is provided with an apparatus configured to provide multiple implicit free sub-spaces.
Fig. 3 illustrates the vehicle from above, wherein the apparatus is configured to provide polygon-shaped implicit free sub-spaces.
Fig. 4 illustrates the vehicle from above, wherein the apparatus is configured to provide both the polygon-based implicit free space and an explicit free space.
Fig. 5 is a flowchart illustrating a method for determining the free space adjacent to the vehicle.
Fig. 6 illustrates the apparatus arranged for determining the free space.
Fig. 7 generally illustrates a vehicle comprising the apparatus illustrated in fig. 6.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

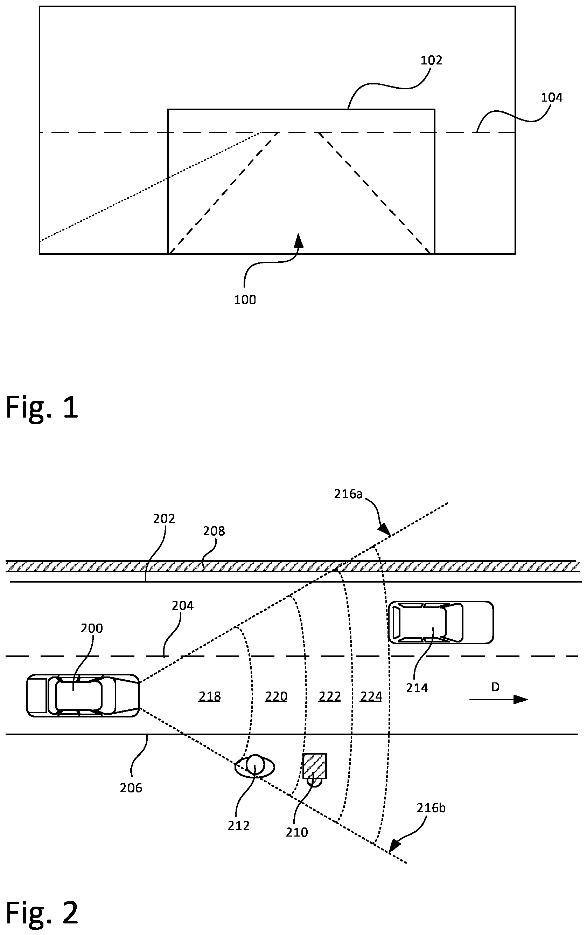

Fig. 1 generally illustrates by way of example a field of view of a sensor comprised in a front of a vehicle such that a forward view is provided. As illustrated, an ego lane 100, that is, a lane in which the vehicle is placed, is in this example comprised within an area 102 of unobstructed line of sight. Due to that there is no objects obstructing the sight, sensor data pertaining to the ego lane 100 can be obtained up until a line of horizon 104, that is, a line that separates ground from the sky.

Fig. 2 illustrates by way of example an ego vehicle 200 from above. In this example, a two-lane road is provided. A left lane has a first solid lane marking 202 to the left in a driving direction D, and a dashed lane marking 204 to the right such that the left lane is separated to a right lane, in this particular example being the ego lane. The right lane has a second solid lane marking to the right in the driving direction D, as illustrated. To the left of the first solid lane marking 202, a barrier 208 is provided. In this particular, the barrier 208 is a concrete wall. Thus, unlike the lane markings, the barrier 208 has a height hindering the vehicle to end up at the other side of the barrier.

As illustrated, different objects are present on the road as well as next to the road. In this particular example, a lamp post 210 is provided next to the road. Next to the lamp post 210, and also next to the road, a pedestrian 212 is present. On the left lane of the road, another vehicle 214 is present. In addition to these objects, the lane markings 202, 204, 206 and the barrier 208 may also be considered objects. Generally, these objects can be divided into static and dynamic objects. In the context of this patent application, the static objects are fixed objects, that is, objects that are not intended to be moved, such as the lamp post 210 and the barrier 208 in the example illustrated. The dynamic objects on the other hand is presumed to be moved. By way of example, the other vehicle 214 and the pedestrian 212 are examples of dynamic objects.

To adjust speed, manoeuvring etc, in modern ADS, the objects present in a field of view 216a,b of the ego vehicle 200 may be linked to object types. By doing so, different measures may be taken if an object is linked to a pedestrian-type object or if the object is linked to a lamp post-type object. For instance, if the object is assigned as the pedestrian-type object, this may lead to that speed is reduced, since there is a risk that the pedestrian will move, but on the other hand the speed may be maintained if the object is assigned as the lamp post-type object, since there is no risk that such type of object will move.

A further effect of assigning the objects to different object types, also herein referred to as target object types, is that this may be used for improving the free space assessment. Instead of determining the free space by assessing non-presence of objects on the ground in front of the vehicle 200 solely, the free space may also be implicitly determined by assigning a space between the vehicle 200 and location data sets for instances of the target object types as the free space. In this context, the free space determined by scanning the ground in front of the vehicle 200 for non-presence of objects is referred to as explicit free space. This non-presence of objects may be determined by detecting continued flatness of the road surface, also referred to as ground, or by continuously detecting asphalt. The free space determined as an effect of that there is unobstructed lines of sights between the vehicle and the instances of target object types is referred to as implicit free space. By restricting the implicit free space to the instances of objects related to the target object types, reliability can be improved. In other words, by knowing what to look for algorithms for the target object types can be specifically adapted for different target types, and it is also possible to re-use existing algorithms already developed for other purposes, e.g. traffic sign detection algorithms not developed specifically for free space assessment may also serve the purpose of determining the implicit free space. Another positive effect with using the implicit free space detection is that the free space may be extended in terms of distance from the ego vehicle. It is namely, under some circumstances, difficult to reliably detect the flatness of the road surface and also to continuously detect asphalt, at longer distance, e.g. 100 meters or more from the ego vehicle. As a consequence, by using the implicit free space detection, it may be possible to extend the free space, thereby making it possible to e.g. safely move the ego vehicle forward at higher speeds than possible if using the explicit free space detection approach.

Still a positive effect is that the use of the implicit free space detection approach provides for that cost efficiency can be improved. By way of example, in order to be able to reliably detect the flatness of the road surface at long distances from the ego vehicle, e.g. 100 meters or more, advanced on-board vehicle sensors are required. On the other hand, if applying the implicit free space detection approach, sensor requirements can be lowered, i.e. less advanced sensors may be required. One reason for this is that rain, leaves etc on the road surface may have a significant impact on the explicit free space detection approach, thereby increasing demands on the sensors used in systems implementing this approach, but not a significant impact on the sensors used for implementing the implicit free space detection approach, which sensors may be configured to detect cars, pedestrian and other object types.

In fig. 2, four different implicit free sub-spaces, referred to as a first free sub-space 218, a second free sub-space 220, a third free sub-space 222 and a fourth free sub-space 224, are illustrated by way of example. The first free sub-space 218 comprises a space between the vehicle 200 and the pedestrian 212. The second free sub-space 220 comprises a space between the vehicle 200 and the lamp post 210. The third free sub-space 222 comprises a space between the vehicle 200 and the barrier 208. The fourth free sub-space 224 comprises a space between the vehicle 200 and the other vehicle 214. By having different free sub-spaces linked to different target object types in this way provides for that a more granular free space may be provided. Put differently, while the explicit free space may provide a space in which no hurdles or objects are present on the ground, the different implicit free sub-spaces may provide different spaces linked to different target object types. By way of example, for speed controlling purposes it may be of interest to receive implicit free sub-spaces linked to dynamic target object types, e.g. the first free sub-space 218 linked to the pedestrian-object type or the fourth free sub-space 224 linked to the vehicle-object type.

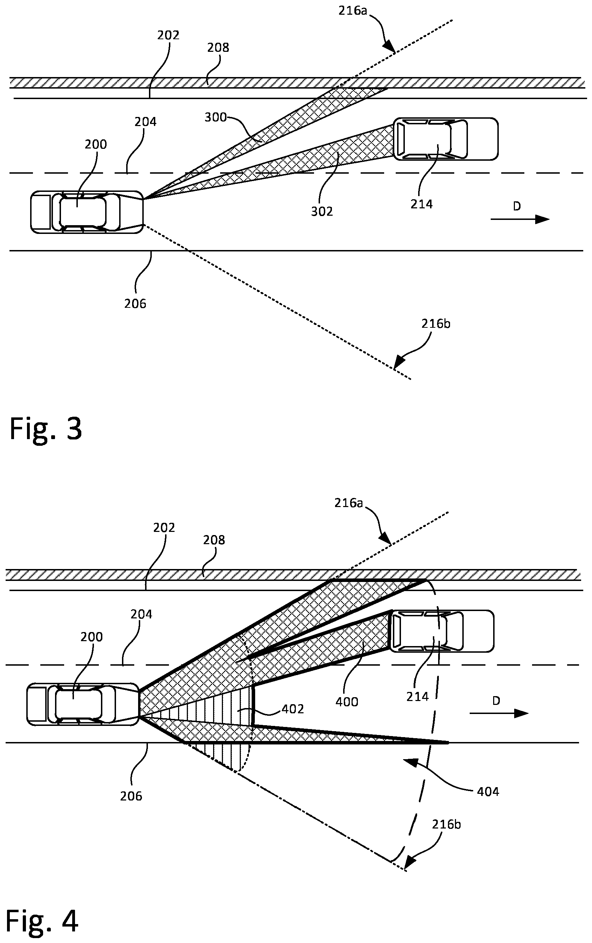

Even though the first to fourth implicit free sub-space are illustrated as fan-shaped sections of the field of view in fig. 2, the implicit free space and also the implicit free sub-spaces may not necessarily be assigned in this way. As illustrated in fig. 3, by defining the implicit free space as the space between the vehicle and the location data of the instances of the target object types and by not making any assumptions about the space in which no detections are made, the implicit free space may instead be determined as polygons formed between location data of the one or more sensors of the vehicle and the location data of the instances of the target objects. In fig. 3, for illustrative purposes, the implicit free space formed by one of the sensors provided on the vehicle 200 and the detected objects are illustrated. In the example illustrated, two different target object types are arranged to be detected; vehicle-type objects and barrier-type objects. As illustrated, based on the unobstructed line of sights between the sensor of the vehicle and the barrier 208, a first polygon-shaped implicit free sub-space 300 may be obtained. In a similar manner, based on the unobstructed line of sights between the sensor and the vehicle 214, a second polygon-shaped implicit free sub-space 302 may be obtained. Put differently, while the explicit free space may cover a full width of the field of view, the implicit sub-spaces may only cover a portion of the width of the field of view. In addition, while the explicit free space may be associated with a maximum distance threshold, that is, a distance beyond which it is not possible to make reliable non-presence detections, the implicit free space is not limited by such maximum distance threshold. Instead, in case it is possible to reliably detect an object of a pre-defined target object type, this will as a consequence give rise to the implicit free space. Put differently, the implicit free space assessment can be improved as a consequence of that the object recognition is improved.

Fig. 4 illustrates an example of similar to the example illustrated in fig. 3, but instead of depicting the effect of only one sensor, the example illustrated in fig. 4 is using an array of sensors, that is, multiple sensors placed next to each other. An effect of using the array of sensors is that the implicit free sub-spaces related to the detection of the vehicle-type object and the barrier-type object are extended. In the example illustrated in fig. 4, a solid lane-type object is also detected with the effect that there is also an implicit free sub-space to the right of the vehicle seen from the driving direction D. The different implicit free sub-space obtained via the unobstructed line of sights between the location data of the sensors and the location data of the instances of the target object types may be combined into an implicit free space 400 as illustrated. In addition to the implicit free space 400, which may, as described above, depend on the objects, static as well as dynamic, identified by the ADS or other part of the vehicle, the explicit free space 402 may be provided. As described above, the explicit free space 402 may be a result of a scanning in the field of view for any objects that may be at risk from colliding with the vehicle 200. As illustrated, by combining the implicit and explicit free space 400, 402 it is made possible to provide a combined free space, illustrated by a bolded line. The explicit free space 402 in this combined free space serves the purpose of identifying non-presence of objects, while the implicit free 400 serves the purpose of identifying known types of objects, i.e. the target object types, and based on identified instances of these types indirectly determine that there are no objects present between the vehicle and the instances.

Even though not illustrated, the one or more sensors of the vehicle may provide different capability of detecting the instances of the target object types at different points of time. For instance, it may be that one or several sensors are covered in dirt preventing them from providing reliable detections of objects. The capability may also be related to sensor defects. For instance, if it is detected that a sub-set of sensor elements of one of the sensors are not functional, this will result in that part of the space adjacent to the vehicle will not be covered by this one sensor. Any deviations or events affecting the sensor's current capability of detecting the objects adjacent to the vehicle may be reflected in so-called sensor health monitoring data. By getting access to this data, this data can be taken into account when detecting the one or more instances of the target objects types. Put differently, in case one or more of the sensors are suffering from any deviation, temporarily or not, such information may be taken into account and compensated for. As an alternative, the sensor health monitoring data may be taken into account after the detections have been made. By way of example, in case the detections have been made by one or more sensors that for some reason are not capable of making reliable detections, these detections may be discarded, thereby avoiding that the implicit free space is determined based on e.g. faulty sensors.

Further, in case needed, a reliability assessment of the free space implicitly determined, i.e. the implicit free space, may be conducted. Put differently, the reliability can be estimated by mapping instance location data sets, e.g. coordinates of the instances, for the static objects to reference location data sets of reference static objects. By way of example, referring to fig. 2, provided that the lamp post 210 is assigned as one or the reference static objects, the location data set determined for the lamp post 210 may be mapped to a lamp post reference object, that is, the pre-set location data set for the lamp post 210. A deviation between the instance location data set and the reference location data set, both associated with the lamp post 210, may serve as a measure of reliability. The lower deviation, the better reliability.

Returning to fig. 4, when determining the implicit free space, map data including height data may also be taken into account to reduce a risk of incorrect object detections. By way of example, as illustrated in fig. 4, a surrounding environment may be shaped such that the sight of the sensors is blocked in some directions. In fig. 4, this is exemplified by the barrier 208 to the left seen in the driving direction D. By having this barrier 208 obstructing the sensors' line of sight, it is not made possible for the sensors to detect objects placed behind the barrier seen from vehicle. By having the barrier 208 and other objects reflected in the map data, and also hills and general topology of the landscape, this data can be taken into account when performing the step of detecting the one or more instances of the object types. By doing so, incorrect detections of instances of the object types can be avoided. An area in which the sensors can make detections of the instances without being hindered by objects reflected in the map data is herein referred to as map data-based line of sight area 404. In fig. 4, this area is formed between the vehicle, the field of view 216a, 216b, the barrier 208 and an outer limit.

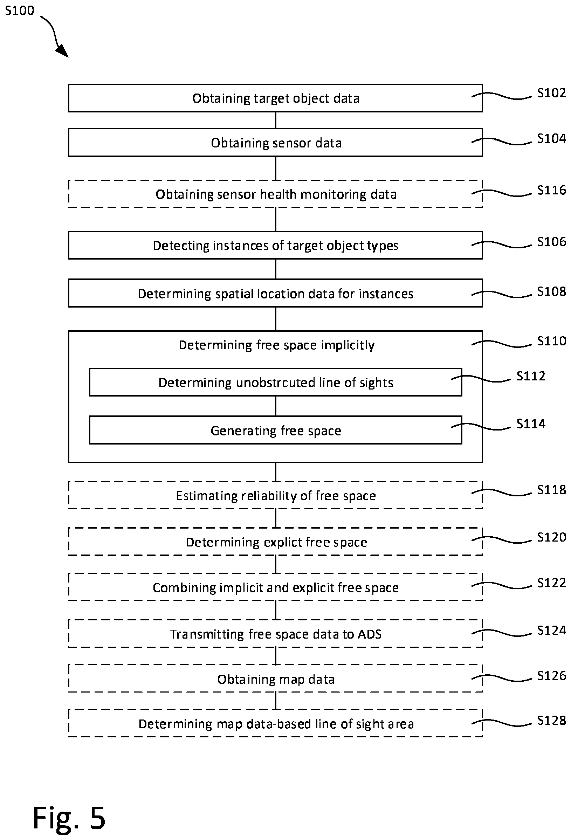

Fig. 5 is a flowchart illustrating a method S100 for determining the free space adjacent to the vehicle. The method may comprise obtaining S102 target object data defining one or more target object types to detect, obtaining S104 the sensor data from the one or more sensors, detecting S106 one or more instances of the target object types in the sensor data, determining S108 spatial location data for the one or more instances of the object types, wherein the spatial location data comprises instance location data sets defining positions of the instances, respectively, and determining S110 the free space implicitly as a space between the vehicle and the instance location data sets by determining S112 one or more unobstructed line of sights between the sensors of the vehicle and the instance location data sets, and generating S114 the free space by combining the one or more unobstructed line of sights.

In line with the advantages presented above, it has been realized that instead of explicitly determining non-presence of objects to obtain the free space, it is possible to make use of that in case objects of the target objects types can be detected, this may be used for implicitly determining the free space.

The method S100 may further comprise obtaining S116 the sensor health monitoring data from the one or more sensors. The sensor health monitoring data may comprise information about the sensors' current capability of detecting the objects adjacent to the vehicle. The step of detecting the one or more instances of the target object types in the sensor data may be performed while taking into account the sensors' current capability reflected in the sensor health monitoring data.

By taking into account the current capability, more reliable free space assessment can be made. For instance, in case part of a sensor is covered in dirt, this may be detected and compensated, thereby reducing the risk of errors.

The objects may comprise static objects and dynamic objects. The method may further comprise estimating S118 a reliability of the free space implicitly determined by mapping the instance location data sets for the static objects to reference location data sets of reference static objects and/or by detecting three-dimensional objects in the free space by using a plurality of sensors. By making use of that the some objects may be associated with the reference location data sets, it is made possible to measure deviations and thereby obtaining a reliability measure. Since the detection of the three-dimensional object involves several sensors, this may also serve as the reliability measure.

The sensor health monitoring data may comprise information about elements of the sensors being blocked, elements of the sensors being non-functional, and/or elements of the sensors being blinded by light.

The method may further comprise determining S120 the explicit free space adjacent to the vehicle by detecting the instances of any objects irrespective of the object types, and combining S122 the free space implicitly determined with the explicit free space into a combined free space. The explicit free space may be a near free space and the implicit free space may be a distant free space. By way of example, the near free space may be 0-40 m from the vehicle and the distant free space may be 40-100 m. However, these measures are highly dependent on the sensors being used.

The method may further comprise transmitting S124 free space data, comprising the free space implicitly determined, to an Automated Driving System (ADS), such that manoeuvring of the vehicle can be performed using the free space data.

The free space data may be used in the ADS for adjusting speed of the vehicle.

The free space may comprise a plurality of free sub-spaces and the target object data may define a plurality of target object types, wherein each of the free sub-spaces are linked to one of the plurality target object types.

An advantage of having the different free sub-spaces linked to different target object types is that more granular data may be provided to e.g. the ADS. For instance, by knowing if the free sub-space is determined based on detections of pedestrians or determined based on detections of lane markers, the free space may be handled differently by the ADS.

Different modules of the ADS may use a combination of one or more of the free sub-spaces as input.

The method S100 may further comprise obtaining S126 map data including height data, determining S128 the map data-based line of sight area based on the map data, wherein the step of detecting one or more instances of the object types is performed while taking into account the map data-based line of sight area.

An advantage with taking into account the map data is that the static objects and their height may be taken into account such that obstructed and non-obstructed areas surrounding the vehicle may be determined. In addition to the static objects, it is also possible to take into account the geographical topology surrounding the vehicle. For instance, in case the vehicle is placed at a foot of a steep hill, this may be reflected in the map data and also in the map data-based line of sight area.

The target object types may comprise dimension-specific objects fulfilling one or more geometrical conditions. Put differently, the target object types may be defined based on geometrical properties.

The sensors may comprise one or more lidars, one or more radars and/or one or more cameras.

The method S100 is preferably a computer-implemented method S100, performed by a processing system of the ADS-equipped vehicle. The processing system may for example comprise one or more processors and one or more memories coupled to the one or more processors, wherein the one or more memories store one or more programs that perform the steps, services and functions of the method S100 disclosed herein when executed by the one or more processors.

Executable instructions for performing these functions are, optionally, included in a non-transitory computer-readable storage medium or other computer program product configured for execution by one or more processors.

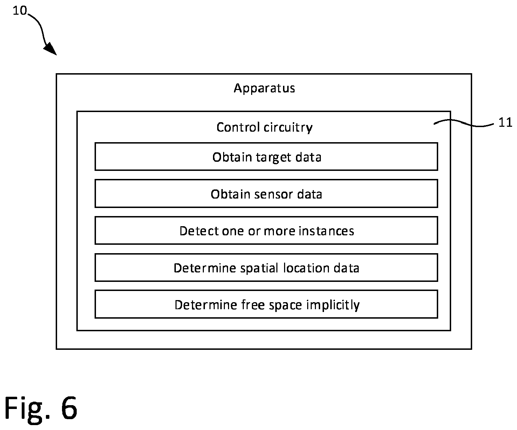

Fig. 6 is a schematic block diagram representation of an apparatus 10 for determining a free space adjacent to a vehicle. The apparatus 10 comprises control circuitry 11 (e.g. one or more processors) configured to perform the functions of the method S100 disclosed herein, where the functions may be included in a non-transitory computer-readable storage medium 12 or other computer program product configured for execution by the control circuitry 11. In other words, the apparatus 10 comprises one or more memory storage areas 12 comprising program code, the one or more memory storage areas 12 and the program code configured to, with the one or more processors 11, cause the apparatus 10 to perform the method S100 according to any one of the embodiments disclosed herein. However, in order to better elucidate the herein disclosed embodiments, the control circuitry is represented as various "modules" or blocks in Fig. 6, each of them linked to one or more specific functions of the control circuitry.

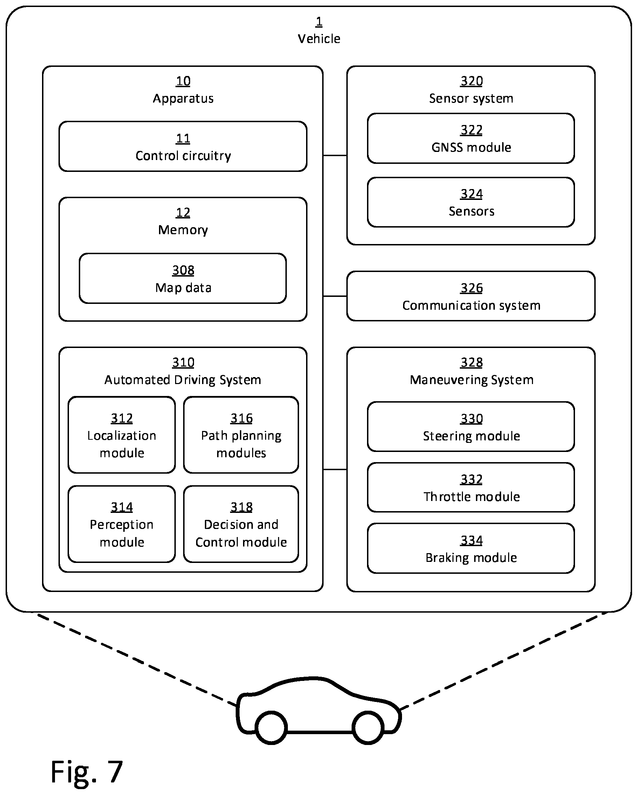

Fig. 7 is a schematic illustration of an ADS-equipped vehicle 1 comprising such the apparatus 10 illustrated in fig. 6. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises the control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the apparatus 10 may form a part of the ADS 310, i.e. the apparatus 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured to carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 7. Moreover, the vehicle 1 may comprise further elements than those shown in Fig. 7. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 7 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 328. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) (associated with the control circuitry 11) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

### ADS feature/function

The ADS comprises an ADS feature (may also be referred to as ADS function) that is preferably a level 3 feature or higher according to SAE J3016 levels of driving automation for on-road vehicles. The ADS feature may for example be a traffic jam pilot, a highway pilot, or any other SAE J3016 level 3+ ADS feature.

### Geographical position

Geographical position of the ego-vehicle is in the present context to be construed as a map position (may also be referred to as in-map position) of the ego-vehicle. In other words, a geographical position or map position can be understood as a set (two or more) of coordinates in a global coordinate system.

### Surrounding environment

The surrounding environment of the ego-vehicle can be understood as a general area around the ego-vehicle in which objects (such as other vehicles, landmarks, obstacles, etc.) can be detected and identified by vehicle sensors (radar, LIDAR, cameras, etc.), i.e. within a sensor range of the ego-vehicle.

### If-terminology

As used herein, the term "if" may be construed to mean "when or "upon" or "in response to determining or "in response to detecting" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

### Obtaining

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

## Claims

1. A method (S100) for determining a free space (218, 220, 222, 224, 300, 302, 400) adjacent to a vehicle (200, 1), wherein the vehicle comprises one or more sensors (324) arranged to detect objects adjacent to the vehicle and an apparatus (10) for processing sensor data, said method comprising
obtaining (S102) target object data defining one or more target object types to detect,
obtaining (S104) the sensor data from the one or more sensors,
detecting (S106) one or more instances of the target object types in the sensor data,
determining (S108) spatial location data for the one or more instances of the object types, wherein the spatial location data comprises instance location data sets defining positions of the instances, respectively, and
determining (S110) the free space implicitly as a space between the vehicle and the instance location data sets by
determining (S112) one or more unobstructed line of sights between the sensors of the vehicle and the instance location data sets, and
generating (S114) the free space by combining the one or more unobstructed line of sights.

2. The method according to claim 1, further comprising
obtaining (S116) sensor health monitoring data from the one or more sensors, wherein the sensor health monitoring data comprises information about the sensors' current capability of detecting the objects adjacent to the vehicle,
wherein the step of detecting the one or more instances of the target object types in the sensor data is performed while taking into account the sensors' current capability reflected in the sensor health monitoring data.

3. The method according to any one of the preceding claims, wherein the objects comprise static objects and dynamic objects, the method further comprising
estimating (S118) a reliability of the free space implicitly determined by mapping the instance location data sets for the static objects to reference location data sets of reference static objects and/or by detecting three-dimensional objects in the free space by using a plurality of sensors.

4. The method according to any one of the claims 2 or 3, wherein the sensor health monitoring data comprises information about elements of the sensors being blocked, elements of the sensors being non-functional, and/or elements of the sensors being blinded by light.

5. The method according to any one of the preceding claims, further comprising
determining (S120) an explicit free space (402) adjacent to the vehicle by detecting the instances of any objects irrespective of the object types, and
combining (S122) the free space implicitly determined with the explicit free space into a combined free space.

6. The method according to any one of the preceding claims, further comprising
transmitting (S124) free space data, comprising the free space implicitly determined, to an Automated Driving System (ADS), such that manoeuvring of the vehicle can be performed using the free space data.

7. The method according to claim 6, wherein the free space data is used in the ADS for adjusting speed of the vehicle.

8. The method according to any one of the preceding claims, wherein the free space comprises a plurality of free sub-spaces (218, 220, 222, 224) and the target object data defines a plurality of target object types, wherein each of the free sub-spaces are linked to one of the plurality target object types.

9. The method according to claim 8, wherein different modules of the ADS use a combination of one or more of the free sub-spaces as input.

10. The method according to any one of the preceding claims, further comprising
obtaining (S126) map data including height data,
determining (S128) a map data-based line of sight area (404) based on the map data,
wherein the step of detecting one or more instances of the object types is performed while taking into account the map data-based line of sight area.

11. The method according to any one of the preceding claims, wherein the target object types comprise dimension-specific objects fulfilling one or more geometrical conditions.

12. The method according to any one of the preceding claims, wherein the sensors comprise one or more lidars, one or more radars and/or one or more cameras.

13. A computer program product comprising instructions which, when the program is executed by a computing device, causes the computer to carry out the method according to any of the claims 1 to 12.

14. An apparatus (10) for determining a free space (218, 220, 222, 224, 300, 302, 400) adjacent to a vehicle, the apparatus comprising control circuitry (11) configured to
obtain target object data defining one or more target object types to detect,
obtain sensor data from one or more sensors of the vehicle,
detect one or more instances of the object types,
determine spatial location data for the one or more instances of the object types, wherein the spatial location data comprises instance location data sets defining positions of the instances, respectively, and
determine the free space implicitly as a space between the vehicle and the instance location data sets by determining one or more unobstructed line of sights between the sensors of the vehicle and the instance location data sets, and generating the free space by combining the one or more unobstructed line of sights .

15. A vehicle (1) comprising
one or more sensors arranged to detect objects in front of the vehicle, and
an apparatus (10) according to claim 14.
